(19) Europäisches Patentamt
European Patent Office
Office européen des brevets

(11) Publication number: 0 229 408 B1

# (12) EUROPEAN PATENT SPECIFICATION

(45) Date of publication of patent specification: 09.01.91 Bulletin 91/02

(51) Int. Cl.[5]: C08G 67/02, B01J 31/18, B01J 31/28

(21) Application number: 86202049.2

(22) Date of filing: 19.11.86

## (54) Novel catalyst compositions and process for the copolymerization of ethene with carbon monoxide.

The file contains technical information submitted after the application was filed and not included in this specification

(30) Priority: 29.11.85 NL 8503305
10.12.85 NL 8503395

(43) Date of publication of application: 22.07.87 Bulletin 87/30

(45) Publication of the grant of the patent: 09.01.91 Bulletin 91/02

(84) Designated Contracting States: BE CH DE FR GB IT LI NL

(56) References cited:
EP-A- 0 019 483
EP-A- 0 086 281
EP-A- 0 170 311
DE-A- 3 008 671
US-A- 3 984 388

(73) Proprietor: SHELL INTERNATIONALE RESEARCH MAATSCHAPPIJ B.V.
Carel van Bylandtlaan 30
NL-2596 HR Den Haag (NL)

(72) Inventor: Drent, Eit
Badhuisweg 3
NL-1031 CM Amsterdam (NL)

(74) Representative: Aalbers, Onno et al
P.O. Box 302
NL-2501 CH The Hague (NL)

EP 0 229 408 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The invention relates to a process for the copolymerization of ethene with carbonn monoxide and to novel catalyst compositions that are used for that purpose.

High molecular weight linear copolymers of carbon monoxide and ethene, wherein the monomer units occur in alternating order (and which polymers therefore consist of units of the formula $-CO-(C_2H_4)-$) can be prepared in the presence of palladium phosphine catalysts. Copolymerization of a monomer mixture which, next to carbon monoxide and ethene, comprises one or more other polymerizable hydrocarbons (A), leads to the formation of terpolymers with units of the formula $-CO-(C_2H_4)-$ and units of the general formula $-CO-A-$ in random distribution over the polymer chain.

The polymers so prepared have excellent mechanical properties, especially very good strength, stiffness and impact resistance. The organic palladium phosphine catalysts are however to some extent susceptible to oxidation. In the presence of air they are converted into phosphine oxides, which are catalytically inactive. Since the organic palladium phosphine compounds are very active catalysts, only small amounts are needed to carry out the polymerization. As a consequence, even traces of air cause deactivation of these catalysts.

It is an object of this invention to conceive catalysts for the copolymerization of ethene and carbon monoxide that are more resistant to oxidation than the phosphine compounds of the prior art. The relevant catalyst that have now been found comprise

a) a palladium compound,
b) an anion of an acid, other than a hydrohalogenic acid, with a pKa of less than 4, and
c) a nitrogen bidentate ligand of the general formula

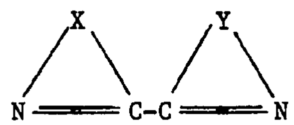

wherein X and Y represent the same or different organic bridging groups, each containing three or four atoms in the bridge at least two of which are carbon atoms.

So far as at least part of component b) is present in the catalyst compositions in a metal salt chosen from the group formed by Ni, Cu, Fe, Co, Cr, Mn and V salts, these are novel catalyst compositions.

It has also been found that the activity of these catalyst compositions can be enhanced by including an organic oxidant into the catalyst compositions. The increase in activity will be larger as more organic oxidant is included in the composition. Catalyst compositions which, in addition to the components a)–c), comprise an organic oxidant (component d)) are novel.

The present patent application therefore relates to a process for the copolymerization of carbon monoxide with ethene and/or styrene and/or dicyclopentadiene and optionally also another olefinically unsaturated hydrocarbon in the presence of a catalyst composition comprising

a) a palladium compound,
b) an anion of an acid with a pKa of less than 4, with the proviso that the acid is not a hydrohalogenic acid, and
c) a nitrogen bidentate ligand of the general formula

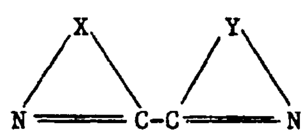

wherein X and Y represent the same or different organic bridging groups, each containing three or four atoms in the bridge at least two of which are carbon atoms, and optionally
d) an organic oxidant.

The palladium compound present in the catalyst composition as component a) preferably is a palladium salt of a carboxylic acid and in particular palladium acetate. Examples of suitable acids with a pKa of less than 4 (determined in aqueous solution at 18°C) are sulphuric acid, perchloric acid, sulphonic acids, such as methanesulphonic acid, trifluoromethanesulphonic acid and paratoluenesulphonic acid, and carboxylic

acids, such as tartaric acid, trichloroacetic acid, difluoroacetic acid and trifluoroacetic acid. Preference is given to para-toluenesulphonic acid and trifluoroacetic acid.

The component b) present in the catalyst compositions can occur therein either in the form of an acid or in the form of a metal salt. If at least part of component b) is present therein as a metal salt chosen from the group formed by Ni, Cu, Fe, Co, Cr, Mn and V salts, preference is given to Ni, Cu, Fe and V salts. The components a) and b) may occur combined in a single compound, if desired. The latter is the case the palladium compound used is a palladium salt of an acid with a pka of less than 4, with proviso that it is not a hydrohalogenic acid. Preferably, component b) is present in the catalyst compositions in a quantity of from 0.5 to 200 and in particular 1.0 to 100, equivalents per gram atom of palladium.

Preferably, the nitrogen bidentate ligand used as component c) is present in the catalyst compositions in a quantity of 0.5-200 and in particular 1-50, mol per mol of palladium compound. In the nitrogen bidentate ligands the bridging groups X and Y are linked by the two carbon atoms shown in the general formula. In addition to this bond the bridging groups X and Y can be linked by a further bond, such as 1,10-phenanthroline and compounds derived therefrom. If, in addition to the carbon atoms, the bridging groups X and Y contain further atoms in the bridge, these atoms are preferably nitrogen atoms. Further, preference is given to nitrogen bidentate ligands wherein the bridging groups X and Y are similar. Examples of suitable nitrogen bidentate ligands are 2,2′-bipyridine and compounds derived therefrom, such as 4,4′-dimethyl-2,2′-bipyridine, 4,4′-dichloro-2,2′-bipyridine, 4,4′-dimethoxy-2,2′-bipyridine and 4,4′-dichloro-2,2′-bipyridine, 4,4′-dimethoxy-2,2′-bipyridine and 4,4′-dicarboxy-2,2′-bipyridine. Further examples of suitable nitrogen bidentate ligands that may be mentioned are 1,10-phenanthroline and compounds derived therefrom, such as 5-chloro-1,10-phenanthroline, 4,7-diphenyl-1,10-phenanthroline, 4,7-dimethyl-1,10-phenanthroline, 2,9-dichloro-1,10-phenanthroline, 1,10-phenanthroline-5-sulphonic acid and 4,7-diphenyl-1,10-phenanthrolinedisulphonic acids. Examples of other suitable nitrogen bidentate ligands are 2,2′-bichinoline, 2-(2-pyridyl) benzimidazole, 3-(2-pyridyl)-5,6-diphenyl-1,2,4-triazine and the mono-sodium salt of 3-(2-pyridyl)-5,6-diphenyl-1,2,4-triazine-p,p′disulphonic acid. Preferably, the nitrogen bidentate ligand present in the catalyst composition is a 2,2′-bipyridine which may or may not be substituted or a 1,10-phenanthroline which may or may not be substituted. Special preference is given to the compounds 2,2′-bipyrine and 1,10-phenanthroline.

The polymerization is preferably carried out in a liquid diluent. Very suitable liquid diluents are lower alcohols such as methanol and ethanol. The quantities in which the catalyst compositions are used in the preparation of the polymers may vary within wide ranges. Per mol of olefinically unsaturated hydrocarbon to be polymerized a quantity of catalyst composition is employed which preferably comprises $10^{-7}$–$10^{-3}$, and in particular $10^{-6}$–$10^{-4}$, gram atom of palladium. The preparation of the polymers is preferably carried out at a temperature of 20-200°C and a pressure of 1-200 bar and in particular at a temperature of 30-150°C and a pressure of 20-100 bar. The catalyst compositions can be used both for the preparation of polymers of carbon monoxide with ethene and for the preparation of polymers of carbon monoxide with ethene and optionally also one or more other olefinically unsaturated hydrocarbons. The latter olefinically unsaturated hydrocarbons preferably have the general formula $CHr_1=CHR_2$, wherein the groups $R_1$ and $R_2$ together contain fewer than 18 carbon atome and either one of the groups $R_1$ and $R_2$ is a hydrocarbon group, while the other is hydrogen or also a hydrocarbon group. In the latter case $R_1$ and $R_2$ may together form part of a cyclic structure, as in the monomers cyclopentene and cyclohexene. In so far as the groups $R_1$ and $R_2$ are hydrocarbon groups, preference is given to alkyl groups. Especially prefered are monomers in which either one of the groups $R_1$ and $R_2$ is hydrogen, while the other is an alkyl group and more specifically a methyl group. In the mixture to be polymerized the molar ratio of the olefinically unsaturated hydrocarbons relative to carbon monoxide preferably is 10 :1-1 :5 and in particular 5 :1-1 :2.

Further research has led to the unexpected find that the present novel catalyst compositions can be used to prepare alternating polymers of carbon monoxide with olefinically unsaturated hydrocarbons, which cannot be prepared with the aid of the catalyst compositions containing only the components a)-c). Examples of such olefinically unsaturated hydrocarbons are styrene, alpha-methylstyrene and compounds derived therefrom, norbornene, norbornadiene and dicyclopentadiene. Copolymers that have been prepared with the novel catalyst compositions of this invention are, inter alia,

1) linear copolymers of carbon monoxide and styrene,

2) linear terpolymers of carbon monoxide, styrene and an alpha-olefin, such as ethene or 1-hexene,

3) linear terpolymers of carbon monoxide, styrene and an alkyl-substituted styrene, such as para-ethylstyrene,

4) linear copolymers of carbon monoxide and dicyclopentadiene, and

5) cross-linked copolymers of carbon monoxide and norbornadiene. The alternating polymers mentioned under 1)-5) are novel.

Finally, it has been found that a given increase in activity can be achieved with a considerably smaller quantity of organic oxidant than would be normally required, if the polymerization is carried out in the presence of an oxygen-containing gas.

The organic oxidant used as component d) is preferably present in a quantity of 1-10000 and in particular 10-5000, mol per gram atom of palladium. Examples of suitable organic oxidants are 1,4-benzochinone and compounds derived therefrom, such as 2,6-dichloro-1,4-benzochinone, tetrachloro-1,4-benzochinone, 2,3-thyl-1,4-benzochinone, 2,6-thyl-1,4-benzochinone, monomethyl-1,4-benzochinone, trichloro-1,4-benzochinone, 2,5-dihydroxy-1,4-benzochinone, 2,5-dihydroxy-3,6-dinitro-1,4-benzochinone and mononitro-1,4-benzochinone.

Examples of other suitable organic oxidants are aliphatic nitrites, such as methyl nitrite, ethyl nitrite, propyl nitrite and butyl nitrite, aromatic nitro compounds, such as nitrobenzene, nitrotoluene and nitrochlorobenzene, and peroxides, such as ditert-butyl peroxide and dicumyl peroxide. Preferably, the organic oxidant present in the catalyst compositions is a 1,4-benzochinone which may or may not be substituted.

The inclusion of a component d) in the catalyst compositions does not only enhance their activity for the polymerization of carbon monoxide with olefinically unsaturated hydrocarbons to a considerable extent, the presence of a component d) in the catalyst compositions also has an influence on the nature of the terminal groups of the prepared polymers. The polymerization of carbon monoxide with an olefinically unsaturated hydrocarbon, such as ethene, in a lower alcohol, such as methanol, as a diluent when using a catalyst composition comprising the components a)-c) leads to the formation of polymers which can be represented by the following formula :
$CH_3-CH_2-CO-1(C_2H_4-CO)_n-CH_2-CH_2-CO-O-CH_3$ i.e polymers whose molecules bear a keto group at one end and an ester group at the other. However, the use of a catalyst composition comprising the components a)-d) leads to the formation of polymers which can be represented substantially by the formula :
$CH_3-O-CO-1(C_2H_4-CO)_n-CH_2-CH_2-CO-O-CH_3$ i.e polymers whose molecules bear ester groups at both ends.

Suitable olefinically unsaturated hycarbons which can be polymerized with carbon monoxide with the aid of the catalyst compositions according to the invention include both compounds consisting exclusively of carbon and hydrogen, and compounds which, in addition to carbon and hydrogen, comprise one or more hetero-atoms as substituents. Examples of the latter compounds are p-chlorostyrene, p-methoxystyrene and p-carboxystyrene. Examples of suitable hydrocarbon monomers are ethene and other alpha-olefins, such as propene, 1-butene, 1-hexene and 1-octene, styrene and alkyl-substituted styrenes, such as p-methylstyrene and p-ethylstyrene, norbomene, dicyclo pentadiene, norbomadiene and divinylbenzene.

The invention will now be illustrated with the aid of the following examples.

Example 1

A carbon monoxide/ethene copolymer was prepared as follows. Into a magnetically stirred autoclave of 250 ml capacity a catalyst solution was introduced comprising 50 ml methanol, 0.1 mmol palladium acetate, 3 mmol 2,2'-bipyridine and 2 mmol para-toluenesulphonic acid. Carbon monoxide was introduced into the autoclave under pressure until a pressure of 20 bar was reached, followed by ethene until a pressure of 60 bar was reached. Finally, the contents of the autoclave were heated to 100°C. After 5 hours the polymerization was stopped by cooling the reaction mixture down to room temperature and then releasing the pressure. The polymer was filtered off, washed with methanol and dried in vacuo at room temperature. The result was 1.5 g of copolymer.

Example 2

A carbon monoxide/ethene copolymer was prepared as follows. Into a magnetically stirred autoclave of 250 ml capacity a catalyst solution was introduced comprising 50 ml methanol, 0.5 mmol palladium acetate, 1 mmol 1,10-phenanthroline and 2 mmol para-toluenesulphonic acid.

carbon monoxide was introduced into the autoclave under pressure until a pressure of 30 bar was reached, followed by ethene until a pressure of 60 bar was reached. Finally, the contents of the autoclave were heated to 90°C. After 5 hours the polymerization was stopped by cooling down the reaction mixture to room temperature and subsequently releasing the pressure. The polymer was filtered off, washed with methanol and dried in vacuo at room temperature. The result was 3,7g of copolymer.

Example 3

A carbon monoxide/ethene copolymer was prepared as follows. Into a magnetically stirred autoclave of 250 ml capacity a catalyst solution was introduced comprising 50 ml methanol, 0.1 mmol palladium acetate, 2 mmol 2,2'-bipyridine and 2 mmol copper para-tosylate. Carbon monoxide was introduced into the autoclave under pressure until a pressure of 30 bar was reached, followed by ethene until a pressure of 50 bar was reached. Finally, the contents of the autoclave were heated to 100°C. After 5 hours the polymerization was stopped by cooling the reaction mixture down to room temperature and then releasing the pressure. The polymer was filtered off, washed with methanol and dried in vacuo at room temperature. The result was 0.8 g of copolymer.

Example 4

A carbon monoxide/ethene copolymer was prepared as follows. Into a magnetically stirred autoclave of 250 ml capacity a catalyst solution was introduced comprising 50 ml methanol, 0.1 mmol palladium acetate, 3 mmol 4,4'-dicarboxy-2,2'-bipyridine and 2 mmol para-toluenesulphonic acid. Carbon monoxide was introduced into the autoclave under pressure until a pressure of 30 bar was reached, followed by ethene until a pressure of 60 bar was reached. Finally, the contents of the autoclave were heated to 90°C. After 5 hours the polymerization was stopped by releasing the pressure. The polymer was filtered off, washed with methanol and dried in vacuo at room temperature. The result was 2.2 g of copolymer. With the aid of $^{13}C$-NMR analysis it was established that the carbon monoxide/ethene copolymers prepared according to Examples 1-4 had a linear alternating structure and consisted of units of the formula $-CO-(C_2H_4)-$. The copolymers had a melting point of 257°C.

Example 5

A carbon monoxide/ethene copolymer was prepared in substantially the same way as the copolymer of Example 1, except for the following differences :

a) the catalyst solution contained 40 mmol 1,4-benzochinone, and
b) the reaction time was 1/4 hour.
The result was 17.1 g of copolymer.

Example 6

A carbon monoxide/ethene copolymer was prepared in substantially the same way as the copolymer of Example 1, except for the following differences :

a) the catalyst solution contained 70 mmol nitrobenzene,
b) the reaction time was 3 hours, and
c) the reaction temperature was 125°C.
The result was 10.0 g of copolymer.

Example 7

A carbon monoxide/ethene copolymer was prepared in substantially the same way as the copolymer of Example 1, except for the following differences :

a) the catalyst solution contained 10 mmol butyl nitrite,
b) the reaction time was 1 hour, and
c) the reaction temperature was 125°C.
The result was 11.5 g of copolymer.

Example 8

A carbon monoxide/ethene copolymer was prepared in substantially the same way as the copolymer of Example 1, except for the following differences :

a) the catalyst solution contained
50 ml methanol,
0. 1 mmol palladium acetate,
2 mmol 2,2'-bipyridine,

2 mmol copper para-tosylate, and
20 mmol 1,4-benzochinone,
b) carbon monoxide was introduced into the autoclave until a pressure of 30 bar was reached, followed by ethene until a pressure of 60 bar was reached.
c) the reaction time was 16 hours, and
d) the reaction temperature was 20°C.
The result was 13.0 g of copolymer.

Example 9

A carbon monoxide/styrene copolymer was prepared as follows. Into a magnetically stirred autoclave of 250 ml capacity a catalyst solution was introduced comprising 10 ml methanol, 0.1 mmol palladium acetate, 3 mmol 2,2'-bipyridine, 2 mmol para-toluenesulphonic acid and 10 mmol 1,4-benzochinone. 50 ml Styrene was introduced into the autoclave and subsequently carbon monoxide was introduced under pressure until a pressure of 40 bar was reached. Finally, the contents of the autoclave were heated to 70°C. After 5 hours the polymerization was stopped and the polymer was isolated as indicated in Example 1.
The result was 24.0 g of copolymer.

Example 10

A carbon monoxide/styrene copolymer was prepared in substantially the same way as the copolymer of Example 9, except for the following differences :
a) the catalyst solution contained 3 mmol 1,10-phenanthroline instead of 3 mmol 2,2'-bipyridine and 50 ml methanol instead of 10 ml, and
b) 10 ml of styrene instead of 50 ml was introduced into the autoclave.
The result was 1.5 g of copolymer.

Example 11

A carbon monoxide/styrene/ethene terpolymer was prepared in substantially the same way as the copolymer of Example 9, except that now ethene was also introduced into the autoclave in such a quantity as to raise the pressure by 5 bar ; this was repeated after one and after two hours.
The result was 28.5 g of terpolymer.

Example 12

A carbon monoxide/styrene/p-ethylstyrene terpolymer was prepared in substantially the same way as the copolymer of Example 9, except that now also 10 ml of p-ethylstyrene was introduced into the autoclave.
The result was 18.5 g of terpolymer.

Example 13

A carbon monoxide/styrene copolymer was prepared in substantially the same way as the copolymer of Example 9, the difference being that now the catalyst solution contained 10 mmol of tetrachloro-1,4-benzochinone instead of 1,4-benzochinone.
The result was 21 g of copolymer.

Example 14

A carbon monoxide/ styrene/n-hexene-1 terpolymer was prepared in substantially the same way as the copolymer of Example 9, the difference being that now also 10 ml of 1-hexene was introduced into the autoclave.
The result was 12 g of terpolymer.

Example 15

A carbon monoxide/styrene copolymer was prepared in substantially the same way as the copolymer of Example 9, except for the following differences :

a) the catalyst solution contained 2 mmol of copper para-tosylate instead of 2 mmol of para-toluenesulphonic acid, and
b) the reaction time was 1 hour.
The result was 20 g of copolymer.

Example 16

A carbon monoxide/styrene copolymer was prepared in substantially the same way as the copolymer of Example 9, except for the following differences :
a) the catalyst solution contained 2 mmol of iron sulphate instead of 2 mmol of para-toluenesulphonic acid, and
b) the reaction temperature was 100°C.
The result was 6 g of copolymer.

Example 17

A carbon monoxide/styrene copolymer was prepared in substantially the same way as the copolymer of Example 9, except that in this case 0.25 mmol instead of 2 mmol of para-toluenesulphonic acid was used. The result was 24.5 g of copolymer.

Example 18

A carbon monoxide/styrene copolymer was prepared in substantially the same way as the copolymer of Example 9, except that in this case use was made of a catalyst solution comprising 10 ml methanol, 0.1 mmol palladium acetate 0.3 mmol 1,10-phenanthroline, 1 mmol para-toluenesulphonic acid, and 20 mmol 1,4-benzochinone.
The result was 5.7 g of copolymer.

Example 19

A carbon monoxide/ styrene copolymer was prepared in substantially the same way as the copolymer of Example 9, except for the following differences :
a) the catalyst solution contained 40 mmol instead of 10 mmol of 1,4-benzochinone, and
b) the reaction time was 1 hour, and
c) the reaction temperature was 90°C.
The result was 22.7 g of copolymer.

Example 20

A carbon monoxide/norbornene copolymer was prepared in substantially the same way as the copolymer of Example 9, except for the following differences :
a) the catalyst solution contained 20 mmol instead of 10 mmol of 1,4-benzochinone,
b) 30 ml of norbornene was introduced into the autoclave instead of 50 ml of styrene,
c) the reaction time was 2 hours, and
d) the reaction temperature was 90°C.
The result was 26 g of copolymer.

Example 21

A carbon monoxide/norbornadiene copolymer was prepared in substantially the same way as the copolymer of Example 9, except for the following differences :
a) the catalyst solution contained 20 mmol instead of 10 mmol of 1,4-benzochinone,
b) 30 ml of norbornadiene was introduced into the autoclave instead of 50 ml of styrene, and
c) the reaction temperature was 90°C.
The result was 25 g of copolymer.

Example 22

A carbon monoxide/dicyclopentadiene copolymer was prepared in substantially the same way as the copolymer of Example 9, except for the following differences :

a) the catalyst solution in addition contained 15 ml of tetrahydrofuran,

b) 50 ml of dicyclopentadiene was introduced into the autoclave instead of 50 ml of styrene,

c) the reaction time was 16 hours, and

d) the reaction temperature was 20°C.

The result was 11.5 g of copolymer.

Example 23

A carbon monoxide/styrene copolymer was prepared in substantially the same way as the copolymer of Example 9, except that in the present case : the catalyst solution contained 2 mmol of trifluoroacetic acid instead of 2 mmol of para-toluenesulphonic acid.
The result was 3.5 g of copolymer.

Example 24

A carbon monoxide/dicyclopentadiene copolymer was prepared in substantially the same way as the copolymer of Example 9, except for the following differences :

a) the catalyst solution contained in addition 15 ml of tetrahydrofuran,

b) 50 ml of dicyclopentadiene was introduced into the autoclave instead of 50 ml of styrene,

c) carbon monoxide was introduced into the autoclave until a pressure of 30 bar was reached, followed by air until a pressure of 60 bar was reached,

d) the reaction time was 16 hours, and

e) the reaction temperature was 20°C.

The result was 17 g of copolymer.

Example 25

A carbon monoxide/styrene copolymer was prepared in substantially the same way as the copolymer of Example 9, except for the following differences :

a) carbon monoxide was introduced into the autoclave until a pressure of 30 bar was reached, followed by air until a pressure of 50 bar was reached, and

b) the reaction time was 3 hours.

The result was 25 g of copolymer.

Example 26

A carbon monoxide/ethene copolymer was prepared in substantially the same way as the copolymer of Example 1, except for the following differences :

a) the catalyst solution contained 0.5 mmol of copper para-tosylate instead of 2 mmol of para-toluenesulphonic acid and, in addition, 1 ml of ditert-butyl peroxide,

b) carbon monoxide was introduced into the autoclave until a pressure of 30 bar, instead of 20 bar, was reached,

c) the reaction temperature was 80°C, and

d) The reaction time was 1 hour.

The result was 2.2 g of copolymer.

Example 27

A carbon monoxide/ethene copolymer was prepared in substantially the same way as the copolymer of Example 1, except for the following differences :

a) the catalyst solution contained tartaric acid (pka = 2.98) instead of para-toluenesulphonic acid and in addition 20 mmol 1,4-benzochinone,

b) ethene was introduced into the autoclave until the pressure arrived at 30 bar and then the pressure was further increased to 60 bar by supplying carbon monoxide,

c) the reaction temperature was 80°C,

d) The reaction time was 2 hours.

The result was 10 g copolymer. By $^{13}C$–NMR analysis it was established that the copolymers and terpolymers prepared according to Examples 4-26 had an alternating structure, which means that carbonyl groups and hydrocarbon groups occur in the polymer chains in alternating order.

It was further established that the polymers prepared according to Examples 4-20 and 22-26 had a linear structure.

comparison of the results of Examples 1 and 5 clearly demonstrates the increase in activity obtained by the inclusion of a component d) in a catalyst composition comprising the components a)-c).

In Example 1, where the catalyst composition contained no component d), reacting during 5 hours results in no more than 1.5 g of copolymer, whereas in Example 5, reacting during 0.25 hour results in 17.1 g of copolymer. The increase in the activity of the catalyst compositions by the insertion of a component d) is also seen from comparison of the results of Example 1 with those of Examples 6, 7 and 26 where, instead of 1,4-benzochinone, the organic oxidants used were nitrobenzene, butyl nitrite and ditert-butyl peroxide, respectively.

The favourable effect of the presence of air during the polymerization is clearly demonstrated by comparison of the results of Examples 22 and 24. In Example 22, carried out in the absence of air, 11.5 g of copolymer was produced, whereas the copolymer yield in Example 24, which was carried out in the presence of air, was 17 g. The favourable influence of the presence of air during the polymerization is also made clear by comparison of the results of Examples 9 and 25.

In Example 9, carried out in the absence of air, the result after a reaction time of 5 hours was 24 g of copolymer, whereas the copolymer yield in Example 25, carried out in the presence of air, was 25 g after a reaction time of no more than 3 hours.

## Claims

1. Process for the copolymerisation of carbon monoxide with ethene and/or styrene and/or dicyclopentadiene and optionally also another olefinically unsaturated hydrocarbon in the presence of a catalyst composition comprising

a) a palladium compound,

b) an anion of an acid with a pka of less than 4, with the proviso that the acid is not a hydrohalogenic acid, and

c) a nitrogen bidentate ligand of the general formula

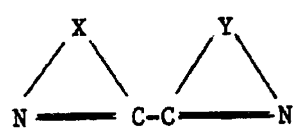

wherein X and Y represent the same or different organic bridging groups, each containing three or four atoms in the bridge at least two of which are carbon atoms, and optionally,

d) an organic oxidant.

2. Process as claimed in claim 1, characterized in that a) is a palladium salt of a carboxylic acid, preferably palladium acetate.

3. Process as claimed in claim 1 or 2, characterised in that b) is an anion of a sulphonic acid, such as para-toluenesulphonic acid or of a carboxylic acid, such as trifluoroacetic acid.

4. Process as claimed in one or more of claims 1-3, characterized in that in the catalyst composition at least part of b) is present as an anion of a metal salt chosen from Ni, Cu, Fe, Co, Cr, Mn and V salts.

5. Process as claimed in any one of claims 1-4, characterized in that in the catalyst composition component b) is present in a quantity of 1.0-100 equivalents per gram atom of palladium.

6. Process as claimed in any one of claims 1-5, characterized in that in the catalyst composition component c) is present in a quantity of 1-50 mol per mol of palladium compound.

7. Process as claimed in any one of claims 1-6, characterized in that the bridging groups X and Y present in component c) of the catalyst composition are the same.

8. Process as claimed in any one of claims 1-7, characterized in that c) is a 2,2′-bipyridine which may or may not be substituted or a 1,10-phenanthroline which may or may not be substituted.

9. Process as claimed in any one of claims 1-8, characterized in that, in addition to carbon monoxide and ethene, the monomer mixture from which the polymers are prepared comprises one or more hydrocarbons of the general formula $CHR_1=CHR_2$, wherein either one of the groups $R_1$ and $R_2$ represents an alkyl group while the other is hydrogen or also an alkyl group, the groups $R_1$ and $R_2$ together containing fewer than 18 carbon atoms.

10. Process as claimed in claim 9, characterized in that, in addition to carbon monoxide and ethene, the monomer mixture from which the polymers are prepared comprises propene.

11. Process as claimed in any one of claims 1-10, characterized in that in the mixture to be polymerized the molar ratio of the olefinically unsaturated hydrocarbons relative to carbon monoxide is from 10 :1 to 1:5.

12. Process as claimed in any one of claims 1 to 9, characterized in that it is carried out at a temperature of 30-150°C and a pressure of 20-100 bar.

13. Catalyst compositions, characterized in that they comprise

a) a palladium compound,

b) an anion of an acid with a pka of less than 4, with the proviso that it is not a hydrohalogenic acid, at least part of which anion is present in a metal salt chosen from the group formed by Ni, Cu, Fe, Co, Cr, Mn and V salts,

c) a nitrogen bidentate ligand of the general formula

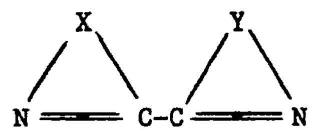

wherein X and Y represent the same or different bridging groups, each containing three or four atoms in the bridge at least two of which are carbon atoms, and optionally,

d) an organic oxidant.

14. Linear alternating copolymers of carbon monoxide and styrene.

15. Linear alternating terpolymers of carbon monoxide, styrene and an alpha-olefin.

16. Terpolymers as claimed in claim 15, characterised in that the alpha-olefin is ethene or 1-hexene.

17. Linear alternating terpolymers of carbon monoxide, styrene and an alkyl-substituted styrene.

18. Terpolymers as claimed in claim 17, characterised in that the alkyl-substituted styrene is para-ethylstyrene.

19. Linear alternating copolymers of carbon monoxide and dicyclopentadiene.

20. Cross-linked copolymers of carbon monoxide and norbornadiene.

## Ansprüche

1. Verfahren zur Copolymerisation von Kohlenmonoxid mit Ethylen und/oder Styrol und/oder Dicyclopentadien und ggfs. auch einem anderen olefinisch ungesättigten Kohlenwasserstoff in Gegenwart einer Katalysatormasse, umfassend

(a) eine Palladium-Verbindung,

(b) ein Anion einer Säure mit einem pKa-Wert von weniger als 4 mit der Maßgabe, daß diese Säure keine Halogenwasserstoffsäure ist und

(c) einen zweizähnigen Stickstoffliganden der allgemeinen Formel

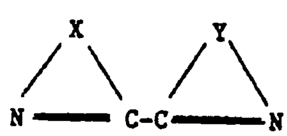

in der X und Y gleiche oder unterschiedliche organische Brückengruppen darstellen, die jeweils drei oder vier Atome in der Brücke enthalten, von denen zumindest zwei kohlenstoffatome sind und ggfs.

(d) ein organisches Oxidationsmittel.

2. Verfahren nach Anspruch 1, dadurch gekennzeichnet, daß a) ein Palladiumsalz einer Carbonsäure,

vorzugsweise Palladiumacetat ist.

3. Verfahren nach Anspruch 1 oder 2, dadurch gekennzeichnet, daß b) ein Anion einer Sulfonsäure wie p-Toluolsulfonsäure oder einer Carbonsäure wie Trifluoressigsäure ist.

4. Verfahren nach einem oder mehreren der Ansprüche 1 bis 3, dadurch gekennzeichnet, daß in der Katalysatormasse mindestens ein Teil von b) als Anion eines Metallsalzes vorhanden ist, das aus Salzen von Ni, Cu, Fe, Co, Cr, Mn und V ausgewählt ist.

5. Verfahren nach einem der Ansprüche 1 bis 4, dadurch gekennzeichnet, daß die Komponente b) der Katalysatormasse in einer Menge von 1,0 - 100 Äquivalent pro gAtom Palladium vorhanden ist.

6. Verfahren nach einem der Ansprüche 1 bis 5, dadurch gekennzeichnet, daß die Komponente c) der Katalysatormasse in einer Menge von 1-50 mol pro mol Palladiumverbindung vorhanden ist.

7. Verfahren nach einem der Ansprüche 1 bis 6, dadurch gekennzeichnet, daß die Brückengruppen X und Y in der Komponente c) der Katalysatormasse die gleichen sind.

8. Verfahren nach einem der Ansprüche 1 bis 7, dadurch gekennzeichnet, daß c) ein 2,2'-Bipyridin ist, das substituiert oder nicht substituiert sein kann oder ein 1,10-Phenanthrolin, das substituiert oder nicht substituiert sein kann.

9. Verfahren nach einem der Ansprüche 1 bis 8, dadurch gekennzeichnet, daß neben Kohlenmonoxid und Ethan das Monomerengemisch, aus dem die Polymere gebildet werden, einen oder mehrere Kohlenwasserstoffe der allgemeinen Formel $CHR_1=CHR_2$ umfaßt, wobei eine der Gruppen $R_1$ und $R_2$ eine Alkylgruppe bedeutet, während die andere Wasserstoff oder ebenfalls eine Alkylgruppe ist und die Gruppen $R_1$ und $R_2$ zusammen weniger als 18 Kohlenstoffatome enthalten.

10. Verfahren nach Anspruch 9, dadurch gekennzeichnet, daß neben dem Kohlenmonoxid und Ethan das Monomerengemisch, aus dem die Polymere hergestellt werden, Propen enthält.

11. Verfahren nach einem der Ansprüche 1 bis 10, dadurch gekennzeichnet, daß in dem zu polymerisierenden Gemisch das MolVerhältnis von olefinisch ungesättigten Wasserstoffen bezogen auf Kohlenmonoxid, 10 :1 bis 1 :5 beträgt.

12. Verfahren nach einem der Ansprüche 1 bis 9, dadurch gekennzeichnet, daß es bei einer Temperatur von 30-150°C und einem Druck von 20-100 bar durchgeführt wird.

13. Katalysatormassen, dadurch gekennzeichnet, daß sie umfassen

(a) eine Palladium-Verbindung,

(b) ein Anion einer Säure mit einem pKa Wert von weniger als 4, mit der Maßgabe, daß es keine Halogenwasserstoffsäure ist, wobei zumindest ein Teil des Anions in Form eines Metallsalzes ausgewählt aus der Gruppe der Ni, Cu, Fe, Co, Cr, Mn und V Salze ist,

(c) einen zweizähnigen Stickstoffliganden der allgemeinen Formel

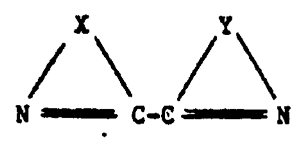

wobei X und Y gleiche oder verschiedene Brückengruppen bedeuten, die jeweils drei oder vier Atome in der Brücke enthalten, wobei zumindest zwei davon Kohlenstoffatome sind und gegebenenfalls

(d) ein organisches Oxidationsmittel.

14. Lineare alternierende Copolymere aus Kohlenmonoxid und Styrol.

15. Lineare alternierende Terpolymere aus Kohlenmonoxid, Styrol und einem Alpha-Olefin.

16. Terpolymere nach Anspruch 15, dadurch gekennzeichnet, daß das Alpha-Olefin Ethan oder 1-Hexen ist.

17. Lineare alternierende Terpolymere aus Kohlenmonoxid, Styrol und einem alkyl-substituierten Styrol.

18. Terpolymere nach Anspruch 17, dadurch gekennzeichnet, daß das alkyl-substituierte Styrol p-Ethylstyrol ist.

19. Lineare alternierende Copolymere aus Kohlenmonoxid und Dicyclopentadien.

20. Vernetzte Copolymere aus Kohlenmonoxid und Norbornadien.

**Revendications**

1. Procédé pour la copolymérisation du monoxyde de carbone avec de l'éthène et/ou du styrène et/ou du dicyclopentadiène et facultativement encore un autre hydrocarbure oléfiniquement insaturé en présence d'une composition catalytique comprenant :

a) un composé du palladium ;

b) un anion d'un acide présentant un pKa inférieur à 4, sous la condition que l'acide n'est pas un hydracide halogéné ; et

c) un ligand azoté bidenté de la formule générale :

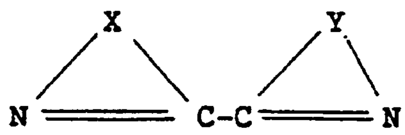

dans laquelle X et Y représentent les mêmes groupes organiques de pontage ou des groupes différents, chacun renfermant 3 ou 4 atomes dans le pont, dont au moins 2 sont des atomes de carbone, et facultativement ;

d) un oxydant organique.

2. Procédé tel que revendiqué dans la revendication 1, caractérisé en ce que a) est un sel de palladium d'un acide carboxylique, de préférence l'acétate de palladium.

3. Procédé tel que revendiqué dans la revendication 1 ou 2, caractérisé en ce que b) est un anion d'un acide sulfonique, tel que l'acide para-toluène sulfonique ou d'un acide carboxylique, tel que l'acide trifluoroacétique.

4. Procédé tel que revendiqué dans l'une ou plus d'une des revendications 1 à 3, caractérisé en ce que, dans la composition catalytique, au moins une partie de b) est présente sous forme d'un anion d'un sel métallique choisi parmi les sels de Ni, Cu, Fe, Co, Cr, Mn et V.

5. Procédé tel que revendiqué dans l'une quelconque des revendications 1 à 4, caractérisé en ce que, dans la composition de catalyseur, le composant b) est présent en une quantité de 1,0-100 équivalents par atome gramme de palladium.

6. Procédé tel que revendiqué dans l'une quelconque des revendications 1 à 5, caractérisé en ce que, dans la composition de catalyseur, le composant c) est présent en une quantité de 1 à 50 moles par mole de composé de palladium.

7. Procédé tel que revendiqué dans l'une quelconque des revendications 1 à 6, caractérisé en ce que les groupes de pontage X et Y présents dans le composé c) de la composition catalytique sont identiques.

8. Procédé tel que revendiqué dans l'une quelconque des revendications 1 à 7, caractérisé en ce que c) est une 2,2'-bipyridine qui peut ou ne peut pas être substituée ou bien une 1,10-phénanthroline qui peut ou ne pas être substituée.

9. Procédé tel que revendiqué dans l'une quelconque des revendications 1 à 8, caractérisé en ce que, outre le monoxyde de carbone et l'éthène, le mélange de monomères à partir duquel on prépare les polymères, comporte un ou plus d'un hydrocarbures de la formule générale $CHR_1=CHR_2$, dans lequel l'un quelconque des groupes $R_1$ et $R_2$ représente un groupe alkyle tandis que l'autre est de l'hydrogène ou bien également un groupe alkyle, les groupes $R_1$ et $R_2$ renfermant conjointement un nombre d'atomes de carbone inférieur à 18.

10. Procédé tel que revendiqué dans la revendication 9, caractérisé en ce que, outre le monoxyde de carbone et l'éthène, le mélange de monomères à partir duquel les polymères sont préparés comprend du propène.

11. Procédé tel que revendiqué dans l'une quelconque des revendications 1 à 10, caractérisé en ce que, dans le mélange devant être polymérisé, le rapport molaire des hydrocarbures oléfiniquement insaturés par rapport au monoxyde de carbone est de 10 :1 à 1 :5.

12. Procédé tel que revendiqué dans l'une quelconque des revendications 1 à 9, caractérisé en ce qu'il est mis en oeuvre à une température de 30 à 150°C, sous pression de 20 à 100 bars.

13. Compositions catalytiques, caractérisées en ce qu'elles comprennent :

a) un composé du palladium ;

b) un anion d'un acide présentant un pKa inférieur à 4, sous la condition que l'acide n'est pas un hydracide halogéné et pour autant qu'au moins une partie de cet anion est présent dans un sel métallique choisi dans le groupe constitué par les sels de Ni, Cu, Fe, Co, Cr, Mn et V ;

c) un ligand azoté bidenté de la formule générale :

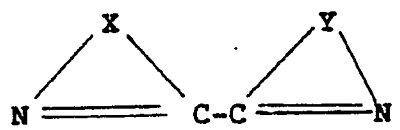

dans laquelle X et Y représentent les mêmes groupes organiques de pontage ou des groupes différents, chacun renfermant 3 ou 4 atomes dans le pont, dont au moins 2 sont des atomes de carbone, et facultativement ;

d) un oxydant organique.

14. Copolymères linéaires alternés de monoxyde de carbone et de styrène.

15. Terpolymères linéaires alternés de monoxyde de carbone, de styrène et d'une alpha-oléfine.

16. Terpolymères tels que revendiqués dans la revendication 15, caractérisé en ce que l'alpha-oléfine est de l'éthène ou du 1-hexène.

17. Terpolymères linéaires alternés de monoxyde de carbone, de styrène et d'un styrène alkyl-substitué.

18. Terpolymères tels que revendiqués dans la revendication 17, caractérisé en ce que le styrène alkyl-substitué est du para-éthylstyrène.

19. Copolymères linéaires alternés de monoxyde de carbone et de dicyclopentadiène.

20. Copolymères réticulés de monoxyde de carbone et de norbornadiène.